# DEMANDE DE BREVET EUROPEEN

(11) **EP 0 671 746 A1**
(43) Date de publication de la demande: **13.09.1995**
(21) Numéro de dépôt: 95400488.3
(22) Date de dépôt: 07.03.1995
(51) Int. Cl.: H01B 3/44

(54) **Câbles gainés à flexibilité améliorée, leur procédé de fabrication**

(30) Priorité: 10.03.1994 FR 9402764
(71) Demandeur: ELF ATOCHEM S.A., F-92800 Puteaux (FR)
(72) Inventeur: Strassel, Albert, F-69600 Oullins (FR)
(74) Mandataire: Rochet, Michel

(57) **Abrégé**

L'invention concerne un câble gainé d'un polymère fluoré rétractable à flexibilité améliorée caractérisé en ce qu'on interpose entre le câble et la gaine fluorée rétractable une couche continue d'élastomère et/ou de TPE. Parmi les polymères fluorés rétractables, on utilise avantageusement les homo- et/ou copolymères de fluorure de vinylidène ayant au moins 50 % de motifs fluorure de vinylidène, éventuellement en mélange majoritaire avec un ou plusieurs autres polymères, et pour les élastomères et/ou TPE, les TPU et/ou les TPE à base polyamide et/ou les TPE à base polyester et/ou les élastomères et TPE acryliques. Ces câbles gainés sont utilisables notamment pour réaliser des câbles électriques et des câbles optiques.

## Description

La présente invention concerne des câbles gainés d'un polymère fluoré rétractable, et plus particulièrement, ceux gainés de (co)polymère de polyfluorure de vinylidène (PVDF).

On appelle câble un gros cordage ou faisceau de fils entrelacés ou torsadés qui peuvent être éventuellement revêtus ou gainés individuellement de polymère thermoplastique de diamètre en général supérieur à 10 mm. Les câbles électriques sont le plus souvent de construction complexe : on trouve au centre des éléments conducteurs filiformes gainés d'une ou plusieurs couches de polymère thermoplastique et de tresses périphériques métalliques ou en fibres synthétiques, le tout étant revêtu d'une gaine polymérique assurant la protection et l'isolation de l'ensemble.

De par leur bonne résistance chimique, aux rayonnements UV, leur très faible perméabilité aux liquides et/ou aux gaz associés à une bonne isolation électrique, on a cherché à gainer les câbles à l'aide de poymères fluorés. Cependant la cristallinité de ces polymères limite leur utilisation en câblerie, notamment pour des câble de diamètre supérieur ou égal à 20 mm, en raison de leur faible allongement au seuil d'écoulement avec pour conséquence, lors de l'enroulement du câble ainsi revêtu, de dépasser aisément ce seuil: la gaine fluorée conserve une déformation permanente dûe à cet enroulement préalable et présente souvent des microfissures pouvant entraîner une fissuration complète de la gaine. Ce phénomène est d'autant plus amplifié lorsque la surface du câble est discontinue : le polymère fluoré pénètre alors dans les défauts de surface de façon à s'y ancrer et, lors de l'enroulement du câble, d'intenses contraintes locales apparaissent entraînant rapidement la fissuration complète de la gaine. C'est ce qui se produit en particulier lorsque la surface externe du câble est complexe, par exemple dans le cas de câbles tressés ou recouverts d'une grille, etc. Le retrait linéaire au moulage des polymères fluorés est particulièrement élevé : 3 % dans le cas du PVDF. Or, lorsque ledit polymère fluoré est extrudé sur le câble, ce retrait est empêché par le câble ; il; se produit alors des tensions internes dans la gaine de polymère, le rendant notamment fragile à la flexion.

La présente invention remédie aux inconvénients énoncés ci-dessus, et notamment à la fragilité à la flexion de la gaine de polymère fluoré. Elle consiste à interposer entre la surface externe non continue du câble et la gaine externe de polymère fluoré rétractable, une couche d'élastomère intermédaire continue afin de supprimer par sa présence les tensions internes dûes à l'ancrage du polymère fluoré rétractable à la surface du câble ainsi qu'à supprimer les tensions axiales au sein du polymère lors de la solidification de la gaine

Par polymère fluoré rétractable, on entend tout polymère ou mélange de polymères dont le retrait linéaire au moulage (Mold Shrinkage dans Polymer Handbook) est supérieur ou égal à 2 %, et de préférence 3 %. Le polymère fluoré rétractable est, de préférence, un polymère semi-cristallin.

Parmi les polymères fluorés rétractables, on peut citer :
- les polymères fluorés tels que :
   - les homo- et copolymères du fluorure de vinylidène (VF2),
   - les homo- et copolymères du trifluoroéthylène (VF₃)
   - les copolymères, et notamment terpolymères, associant des restes des motifs chlorotrifluoroéthylène (CTFE), tétrafluoroéthylène (TFE), hexafluoropropène (HFP) et/ou éthylène et éventuellement des motifs VF2 et/ou VF3.

Parmi les polymères fluorés, on utilise avantageusement les homo- et copolymères à base de fluorure de vinylidène ayant au moins 50 % de motifs fluorure de vinylidène.

Par polymère fluoré rétractable, on entend également les mélanges de polymères fluorés ainsi que les mélanges des précédents avec d'autres polymères non fluorés pourvu que le ou les polymères fluorés restent majoritaires dans le mélange.

On ne sortirait pas du cadre de l'invention si ces polymères rétractables, et de préférence semi-cristallins, contenaient des plastifiants, charges, pigments, stabilisants, renforçants choc, etc.

L'élastomère est choisi et appliqué de telle sorte que son interposition empêche la pénétration du polymère de la gaine dans les dépressions présentes entre les spires ; ainsi par fluage à chaud et sous l'effet de la contrainte appliquée par la gaine au cours de son retrait, il pénètre entre les interstices du câble de façon à ce que le polymère de la gaine soit libre de se resserrer autour du câble métallique sans qu'il ne se crée dans sa masse de tensions internes.

La gaine polymérique gagne ainsi doublement en liberté et de ce fait offre à l'ensemble le maximum d'aptitude à la flexion.

L'aptitude à la flexion de l'ensemble câble - gaine fluorée rétractable est augmentée d'au moins 30 %.

Les polymères élastomériques sont définis par ASTM D 883 comme des matériaux qui, à température ambiante, reviennent rapidement à leurs dimensions et formes initiales approximatives après avoir subi une déformation importante sous l'effet de l'application puis du relâchement d'une contrainte faible.

Les polymères élastomériques peuvent être non seulement des élastomères proprement dits (utilisés dans l'état vulcanisé ou réticulé), mais également des élastomères thermoplastiques (TPE) présentant un allongement au seuil d'écoulement supérieur à 15 %. Les TPE se situent entre les résines thermoplastiques, à mise en oeuvre facile et variée, mais à propriétés limitées en température ou, dans le domaine dynamique et les élastomères aux propriétés élastique remarquables , mais dont la mise en oeuvre est lourde, complexe et souvent polluante. La structure des TPE comporte toujours deux phases non compatibles, l'une d'entre elles rassemblant les séquences thermoplastiques dispersées dans la phase élastomère On distingue en général 5 catégories de TPE
- les élastomères thermoplastiques polyoléfiniques (TPO) sont des mélanges physiques réalisés à partir de polyoléfines. On distingue ceux qui contiennent plus de 60% de polypropylène et ceux dont la phase élastomère est prépondérante (plusde 70 %), celle-ci pouvant être réticulée ou non.
- les copolymères blocs à base de polystyrène dont la phase rigide est constituée de séquences polystyrène, la phase souple pouvant être par exemple formée de séquences polybutadiène (SBS), polyisoprène (SIS), ou poly(éthylène-butylène) (SEBS)
- les copolymères blocs à base de polyuréthanne (TPU) qui peuvent être obtenus par réaction conjointe d'un diol de haute masse moléculaire qui constitue la séquence souple cristallisable du TPE. sur un diisocyanate et un diol de basse masse moléculaire qui engendrent la séquence rigide.
- les copolymères blocs à base de polyester tels que ceux obtenus par copolymérisation d'un polybutylène (PBT) ou d'un polyéthylène téréphtalate (PET) qui constitue les séquences rigides et cristallines et d'un glycol de bas poids moléculaire (butane diol, diéthylène glycol) qui, associé à un polyalkylène éther glycol forme la séquence souple cristallisable.
- les copolymères blocs à base de polyamide dont les séquences rigides sont constituées de polyamide (PA) et les séquences souples cristallisables de polyéther, applelés aussi polyétheramides.

De préférence, la raideur de l'élastomère est inférieure à la raideur du polymère rétractable : elle peut être évaluée en termes de modules de torsion et/ou flexion et/ou traction et/ou dureté Shore, ces valeurs étant mesurées dans les mêmes conditions pour l'élastomère et le polymère fluoré rétractable. On préfère que la raideur de l'élastomère reste inférieure à celle du polymère rétractable quelles que soient les conditions d'utilisation, notamment de température, et compte tenu du vieillissement des matériaux.

A titre d'exemple, on peut utiliser les TPE qui présentent une dureté shore A à 23° C inférieure à 93 ou shore D inférieure à 50 mesurées selon la norme ISO 868. On peut utiliser aussi un élastomère qui a un point VICAT inférieur à 70 ° C quand il est mesure par méthode A/50 de la norme ISO 306.

On utilise avantageusement des élastomères qui vérifient simultanément ces propriétés de dureté, de point VICAT et de module de flexion énoncés ci-dessus.

On préfère que la viscosité de l'élastomère n'augmente pas au cours du vieillissement thermique.

Les élastomères particulièrement recommandés dans le cadre de l'invention peuvent être ohoisis parmi les copolymères EPDM, les copolymères acrylonitrile -butadiène - styrène, les copolymères méthylméthacrylate - butadiène - styrène, les copolymères ester-amide et éther-amide, les copolymères éthylène - oxyde de carbone, les terpolymères éthylène - oxyde de carbone - vinyle acétate, les caoutchoucs acryliques, les copolyéthers - esters thermoplastiques, les copolymères séquencés à base de polystyrène et d'élastomère du type polyisoprène, le polybutadiène etc... les copolymères styrène -butadiène - styrène, les copolymères éthylène - éthylacrylate, éthylène - éthylacétate et éthylène - vinyle acétate ainsi que leurs terpolymères, les élastomères fluorés, les élastomères de silicone, les élastomères silicone fluorés, les polyuréthannes.

Pour les besoins de l'invention, on peut utiliser un élastomère thermoplastique polyuréthanne de dureté shore A inférieure à 92 mesurée selon la norme ISO 868. En outre, on préfère que cet élastomère subisse une forte diminution de viscosité en cours de vieillissement thermique. Cette diminution de viscosité est de préférence d'au moins 60 % après 30 jours à 120° C. L'élastomère thermoplastique polyuréthanne possède habituellement une viscosité à 20° C comprise dans les limites définies ci-dessous. Les valeurs tiennent compte de la correction de RABINOWVITCH appliquée aux liquides non newtoniens.

| **Vitesse de cisaillement corrigée s-1** | **Viscosité en kPa.s** | |
|---|---|---|
| 4,09 | 0,7 | 1,3 |
| 13,64 | 0,25 | 0,85 |
| 36,15 | 0,19 | 0,78 |
| 122,91 | 0,12 | 0,70 |

La vitesse de cisaillement est également le gradient de vitesse de déformation au cisaillement.

On peut appliquer la couche d'élastomère sur le câble par tout moyen connu, tel que extrusion, enduction, projection, passage dans une dissolution de l'élastomère dans un solvant.

La couche intermédiaire d'élastomère peut avoir une épaisseur variant de 0,05 à 2 mm.

L'épaisseur de la gaine de polymère rétractable peut varier par exemple de 0,2 à 5 mm.

Les méthodes habituelles connues du gainage des câbles, notamment métalliques, s'appliquent à la fabrication du câble gainé, objet de l'invention. Il est possible par exemple de coextruder simultanément le polymère fluoré rétractable et l'élastomère au moyen de deux extrudeuses et d'une boîte de répartition des flux en tête d'équerre recevant en son centre le câble métallique à gainer. II est également possible de gainer classiquement par extrusion-gainage le tube flexible métallique avec l'élastomère, puis ensuite, dans une seconde extrusion-gainage de revêtir l'ensemble d'une couche de polymère rétractable ou encore de gainer le câble métallique avec l'élastomère éventuellement dissous dans un solvant puis, après une éventuelle réticulation et évaporation du solvant, dans un deuxième temps, de revêtir l'ensemble d'une couche de polymère rétractable par une extrusion-gainage.

Le câble, objet de l'invention, est particulièrement adapté pour la réalisation de câble électriques, de câbles optiques.

Les exemples suivants illustrent l'invention sans toutefois la limiter.

Dans tous les exemples, les duretés Shore A et D sont mesurées selon la norme ISO 868.

### Exemple

On extrude de façon classique un homopolymère de PVDF de melt index 2,2-2,5 g/10 min à 230°C sous 5 kg (selon ISO 1133) autour d'un câble électrique. Celui-ci a un diamètre de 30 mm. Il est constitué d'un ensemble de conducteurs électriques eux-même gainés d'un polymère fluoré et l'ensemble est rassemblé en un câble et maintenu par une gaine en tissu de verre. Ce tissu présente des perforations carrées de 0,3 mm de côté. L'épaisseur de la toile est de 0,8 mm. L'épaisseur de PVDF est de 2 mm (essai 1).

Dans un autre essai (essai 2) on extrude autour du même câble d'abord un élastomère de polyéther polyuréthanne de dureté shore A 87 mesurée selon la norme ISO 868) avec une épaisseur de 0,8 mm et dans une deuxième opération on extrude le même PVDF que dans l'essai 1 en 2 mm d'épaisseur par dessus le polyéther polyuréthanne.

On enroule le câble autour de mandrins de rayons différents de plus en plus faibles. On observe à partir d'un rayon donné un blanchissement de la gaine. Ce blanchissement examiné au microscope optique correspond à des micro-fissurations. Elles sont irréversibles. Ce blanchissement est donc le signe du début de la destruction de la gaine.

On opère ainsi avec les câbles de l'essai 1 et 2 à 20°C/-30°C.

| TEMPERATURE | Rayon de courbure du mandrin (en mm) | Essai I sans elastomère comparatif | Essai 2 avec elastomère |
|---|---|---|---|
| 20°C | 400 | bon | bon |
| | 300 | blanchi | bon |
| | 200 | blanchi | bon |
| | 150 | blanchi | blanchi |
| | 100 | rupture | blanchi |
| -30°C | 400 | blanchi | bon |
| | 300 | rupture | bon |
| | 200 | rupture | blanchi |
| | 150 | rupture | blanchi |
| | 100 | rupture | rupture |

## Revendications

1. Câble gainé d'un polymère fluoré rétractable, de préférence semi-cristallin, caractérisé en ce qu'on interpose entre le câble nu, éventuellement complexe, et la gaine de polymère fluoré rétractable une couche continue intermédiaire d'élastomère et/ou d' élastomère thermoplastique.

2. Câble selon la revendication 1, caractérisé en ce que l'élastomère présente une raideur inférieure à celle du polymère rétractable.

3. Câble selon la revendication 1 ou 2, caractérisé en ce que l'élastomère est choisi parmi les polyuréthannes thermoplastiques et/ou les élastomères thermoplastiques à base polyamide et/ou les élastomères thermoplastiques à base polyester et/ou les élastomères et élastomères thermoplastiques acryliques.

4. Câble selon l'une des revendications 1 à 3, caractérisé en ce que le polymère fluoré rétractable est choisi parmi les homo- et/ou copolymères de fluorure de vinylidène ayant au moins 50 % de motifs fluorure de vinylidène, éventuellement en mélange majoritaire avec un ou plusieurs autres polymères.

5. Procédé de fabrication d'un câble gainé selon l'une quelconque des revendications 1 à 4, caractérisé en ce que la gaine de polymère fluoré rétractable et la couche intermédiaire d'élastomère et/ou d'élastomère thermoplastique sont coextrudées simultanément, éventuellement directement sur le câble nu.

6. Procédé de fabrication d'un câble gainé selon l'une quelconque des revendications 1 à 4, caractérisé en ce que le câble nu est revêtu d'une couche d'élastomère, tel que par extrusion-gainage ou par dissolution de l'élastomère dans un solvant suivie d'une réticulation et/ou évaporation du solvant, puis l'ensemble est revêtu d'une couche de polymère fluoré rétractable, tel que par extrusion-gainage.

7. Utilisation de câbles gainés selon l'une quelconque des revendications 1 à 4 en câblerie électrique.

8. Utilisation de câbles gainés selon l'une quelconque des revendications 1 à 4 pour des câbles optiques.
